# EUROPÄISCHE PATENTSCHRIFT

(11) **EP 3 752 734 B1**
(45) Veröffentlichungstag und Bekanntmachung des Hinweises auf die Patenterteilung: **06.08.2025**
(21) Anmeldenummer: 18829240.3
(22) Anmeldetag: 11.12.2018
(51) Int. Cl.: F03D 7/02, F16D 55/22, F16D 125/06

(54) **BREMSEINRICHTUNG FÜR EINE WINDKRAFTANLAGE UND WINDKRAFTANLAGE**
BRAKING DEVICE FOR A WIND TURBINE AND WIND TURBINE
DISPOSITIF DE FREINAGE POUR EOLIENNE ET EOLIENNE

(30) Priorität: 16.02.2018 DE 102018103532
(43) Veröffentlichungstag der Anmeldung: 23.12.2020
(73) Patentinhaber: KS Gleitlager GmbH, 68789 St. Leon-Rot (DE)
(72) Erfinder: LANGNER, Heinbert, 33378 Rheda-Wiedenbrueck (DE); FISCHER, Lukas, 26871 Papenburg (DE)
(74) Vertreter: DREISS Patentanwälte PartG mbB
(86) Internationale Anmeldenummer: PCT/EP2018/084316
(87) Internationale Veröffentlichungsnummer: WO 2019/158244

(56) Entgegenhaltungen:
- EP-A1- 2 488 750
- EP-A2- 0 945 613
- EP-B1- 0 945 613
- EP-B1- 2 488 750
- CN-U- 202 833 785
- CN-U- 202 883 245
- DE-A1- 10 218 112
- DE-U1- 202012 012 618
- US-A1- 2010 038 192

## Beschreibung

Die Erfindung betrifft eine Bremseinrichtung für eine Windkraftanlage mit einer einem Rotor zugeordneten Welle und einer der Welle zugeordneten und mit dieser drehfest gekoppelten Bremsscheibe, umfassend einen Bremskolben, wobei der Bremskolben gegen die Bremsscheibe zustellbar ist. Weiter betrifft die Erfindung eine Bremseinrichtung für eine Windkraftanlage mit einer einen Rotor haltenden und lagernden Gondel und mit einem Trägerturm für die Gondel, wobei die Gondel gegenüber dem Trägerturm um eine Achse drehbar gelagert ist, wobei die Bremseinrichtung zum Festsetzen der Gondel gegenüber dem Trägerturm in einer wählbaren Drehstellung ausgebildet ist, wobei die Bremseinrichtung einen Bremskolben umfasst.

Eine Bremseinrichtung der zuletzt genannten Art ist bekannt aus DE 20 2012 008 610 U1.

Aus DE 102 18 112 A1 ist eine Fahrzeugbremseinrichtung bekannt, bei der ein sehr komplex bauender Bremskolben ein kalottenförmig gelagertes Teil aufweist, das nicht unmittelbar als Bremsbelagträgerteil fungiert.

DE 20 2012 012 618 U1 zeigt eine Bremseinrichtung mit den Merkmalen des Oberbegriffs des Anspruchs 1.

EP 2 488 750 A1, zeigt eine weitere Bremseinrichtung mit den Merkmalen des Oberbegriffs des Anspruchs 1.

CN 202 833 785 U zeigt eine Bremseinrichtung für eine Windkraftanlage mit einem hydraulisch betätigbaren Bremskolben der einen rohrförmigen Abschnitt mit einer Längsmittelachse aufweist. Das einem Gegenlager zugewandte Ende des rohrförmigen Abschnitts ist soweit ersichtlich durch ein plattenförmiges Einsatzteil verschlossen, welches eine sphärische Oberflächenwölbung aufweist, gegen das ein Druckvermittlungsstück mit einer komplementär zurückspringenden sphärischen Oberflächenwölbung anliegt. Dieses Druckvermittlungstück liegt wiederum axial gegen einen Bremsschuh an.

DE 102 18 112 A1 betrifft und offenbart eine Bremseinrichtung bei einem Kraftfahrzeug. Ein Bremskolben der Bremseinrichtung umfassend einen soweit ersichtlich rohrförmigen Abschnitt. An den rohrförmigen Abschnitt schließt sich ein ringförmiges Halte- und Lagerteil mit einer kugelkalottenförmigen Lagerfläche radial innen an, gegen welche ein Bremsbelagtägerteil mit einer komplementären Gegenlagerfläche anliegt. Das Halte- und Lagerteil ragt zusammen mit dem Bremsbelagträgerteil und Komponenten des Bremsbelags in einen Sattelraum der Bremseinrichtung vor.

Bei einer weiteren vorbekannten Bremseinrichtung gemäß EP 3 246 588 A1 ist ein Bremskolben komplexen Aufbaus bekannt, bei dem eine Bremsbelagträgerplatte unter Vorspannung durch ein Druckfederpaket steht. Sämtliche Komponenten einschließlich der Bremsbelagträgerplatte sind mehr oder weniger schwimmend aneinander gelagert und stehen unter axialer Vorspannung. Nur die Bremsbelagträgerplatte gleitet mit ihren Umfangsrändern gegen einen Zylinderraum. Hierdurch können Seitenkräfte, die auf die Bremsbelagträgerplatte einwirken, nicht optimal von einem Gehäuse aufgenommen werden, und es werden Knickmomente in der Tragstruktur innerhalb des Druckfederpakets erzeugt, die zu Schäden führen können. Durch Überlast-Peaks wirken große Kräfte auf den Bremskolben ein, wobei die Bremsbelagträgerplatte den größten Kraftanteil aufnimmt; sollte die einwirkende Kraft größer als die Vorspannkraft sein, hat das eine Überspannung des Druckfederpakets zur Folge. Dies wiederum führt dazu, dass die Bremsbelagträgerplatte auf das Druckstück des Federpakets ausschlägt und es zu Schäden bis zum Ausfall kommen kann.

Für die Aufnahme der Seiten- oder Querkräfte liegt das plattenförmige Bremsbelagträgerteil auch nur mit seinen Umfangsrändern und damit mit einer sehr kleinen Fläche gegen ein zylindrisches Gehäuse an, was sich hinsichtlich der Querkraftableitung als problematisch auswirkt.

Diese Probleme sollen mit der vorliegenden Erfindung vermieden werden. Es soll eine auf wirtschaftliche Weise herstellbare Bremseinrichtung bei einer Windkraftanlage geschaffen werden , die sich an nicht ideale Geometrien der Bremsscheibe oder eines Gegenlagers bei dynamischer Belastung der Windkraftanlage oder bei zunehmender Abnutzung der Bremsscheibe oder des Gegenlagers anzupassen vermag und den dabei auftretenden Belastungen dauerhaft standzuhalten vermag.

Diese Aufgabe wird erfindungsgemäß gelöst durch eine Bremseinrichtung mit den Merkmalen des Anspruchs 1. Das Halte- und Lagerteil kann dabei in den rohrförmigen Abschnitt eingepresst sein oder eingeklebt sein, oder es ist unter Ausnutzung thermischer Ausdehnung und anschließenden Zusammenziehung beim Abkühlen ortsfest verankert. Die letztere Variante bevorzugt, wobei hierfür vor dem Fügevorgang der rohrförmige Abschnitt erwärmt und/oder das Halte- und Lagerteil abgekühlt wird. Durch eine Temperaturanpassung nach dem Fügevorgang sind die Komponenten dann ortsfest aneinander verankert.

Der Bremskolben der erfindungsgemäßen Einrichtung ist aus drei Kernbestandteilen, nämlich dem rohrförmigen Abschnitt, dem Halte- und Lagerteil und dem Bremsbelagträgerteil gebildet. Die Bremseinrichtung umfasst also einen Zylinderraum, gegen den der Bremskolben mit seinem rohrförmigen Abschnitt über große Flächen längsgeführt aufgenommen ist. Zunächst entstehen die Querkräfte aber bei dem Bremsbelagträgerteil. Durch die kalottenförmig ausgebildete Lagerfläche und Gegenlagerfläche ist ein großer flächenmäßiger Kontakt zwischen dem Bremsbelagträgerteil und dem Halte- und Lagerteil realisiert, so dass die Querkräfte gleichmäßig übertragen und von dem Halte- und Lagerteil, welches in dem rohrförmigen Abschnitt ortsfest eingepresst ist, auf den rohrförmigen Abschnitt und von dort in die Zylinderfläche übertragen werden. Erfindungsgemäß ist also das Bremsbelagträgerteil variabel anpassbar vorgesehen, und die Kraftübertragungsflächen sind über die kalottenförmigen Lagerflächen groß, so dass auch im dauerhaften Betrieb der Bremskolben und die Bremseinrichtung vor einer Überlastung oder Reibschweißerscheinungen geschützt sind.

Bei einer bevorzugten Ausführungsform wird vorgeschlagen, dass sich das Bremsbelagträgerteil mit einem Halsbereich durch die von dem ringförmigen Halte- und Lagerteil begrenzte Öffnung hindurcherstreckt und darin in Richtung der Längsmittelachse formschlüssig jedoch gleichwohl schwenkbar gehalten ist. In weiterer Ausbildung dieses Gedankens erweist es sich als vorteilhaft, wenn das Bremsbelagträgerteil ausgehend von seinem Halsbereich einen radialen Überstand über die von dem ringförmigen Halte- und Lagerteil begrenzte Öffnung bildet, so dass hierdurch die formschlüssige Halterung des Bremsbelagträgerteils an dem Halte- und Lagerteil gebildet ist.

Auf diese Weise kann also eine flexibel anpassbare Halterung des Bremsbelagträgerteils an dem eingepressten Halte- und Lagerteil auf einfache und wirksame Weise realisiert werden.

Es kann ferner vorgesehen sein, dass der radiale Überstand von einem Sicherungselement, insbesondere von einem Sicherungsring, insbesondere von einem Sprengring gebildet ist, das bzw. der an dem Halsbereich des Bremsbelagträgerteils gelagert ist. Insbesondere könnte ein Sprengring in einer Außenumfangsnut des Halsbereichs des Bremsbelagträgerteils angeordnet sein.

Zur weiteren Ausbildung des kalottenförmigen Lagerbereichs erweist es sich als vorteilhaft, wenn bei der Lagerfläche des Halte- und Lagerteils und/oder bei der Gegenlagerfläche des Bremsbelagträgerteils eine tribologisch wirksame Beschichtung vorgesehen ist.

Weiter ist vorteilhafterweise in der Durchgangsöffnung des Bremskolbens eine konzentrisch zu der Längsmittelachse ausgebildete Stufe vorgesehen ist, gegen welche sich das Halte- und Lagerteil axial abstützt. Hierbei erweist es sich als vorteilhaft, wenn diese Stufe mit ihrer Anlagefläche für das Halte- und Lagerteil von der Bremsscheibe bzw. von dem Gegenlager abgewandt ist. Dies hat den Vorteil, dass bei Einleitung einer Stellkraft, insbesondere und vorzugsweise in Form einer Federkraft, insbesondere durch ein Druck- oder Tellerfederpaket, auf das Halte- und Lagerteil diese Stellkraft über die Stufe auf den restlichen Kolben, also den rohrförmigen Abschnitt, übertragen wird, ohne dass die Gefahr besteht, dass der Presssitz infolge der Stellkräfte in Löserichtung kraftbeaufschlagt wird.

Ungeachtet dessen wird vorgeschlagen, dass eine Federstellkomponente, vorzugsweise in Form eines Druckfederpakets oder Tellerfederpakets, vorgesehen ist für die Ausübung von für eine Stellbewegung des Bremskolbens erforderlichen Stellkräften.

Dabei erweist es sich als vorteilhaft, wenn die Federstellkomponente unmittelbar auf den rohrförmigen Abschnitt und/oder auf das Halte- und Lagerteil und/oder auf das Bremsbelagträgerteil einwirkt. Vorzugsweise wirkt die Federstellkomponente unmittelbar auf das Halte- und Lagerteil ein und stützt sich hiergegen ab.

Es erweist sich weiter als ganz besonders vorteilhaft, wenn dass das Halte- und Lagerteil mit seiner kalottenförmigen Lagerfläche in Richtung der Längsmittelachse vollständig innerhalb des rohrförmigen Abschnitts des Bremskolbens angeordnet ist. Solchenfalls werden die Seiten- oder Querkräfte, die auf das Bremsbelagträgerteil einwirken gleichmäßig auf den rohrförmigen Abschnitt übertragen und können von dort gleichmäßig an die den Zylinderraum begrenzende Zylinderfläche abgeleitet werden.

Weiter erweist sich als vorteilhaft, wenn das Bremsbelagträgerteil in Richtung der Längsmittelachse vollständig innerhalb des rohrförmigen Abschnitts des Bremskolbens angeordnet ist und gegenüber einem Stirnende des rohrförmigen Abschnitts in Richtung der Längsmittelachse (8) wenigstens 0,5 mm, insbesondere wenigstens 1,0 mm, insbesondere wenigstens 1,5 mm, insbesondere wenigstens 2,0 mm, insbesondere wenigstens 2,5 mm und insbesondere höchstens 3,5 mm zurückgesetzt ist, und wenn der rohrförmige Abschnitt zumindest an seinem Stirnende aus einer Gleitlagerlegierung gebildet ist. In diesem Fall kann nämlich der rohrförmigen Abschnitt selbst als Notbremse gegenüber der Bremsscheibe oder einem sonstigen Gegenlager dienen, für den Fall, dass der Bremsbelag von dem Bremsbelagträgerteil durch große Krafteinwirkung abgeschert sein sollte. Somit können Beschädigungen an der kostenintensiven Bremsscheibe oder dem sonstigen kostenintensiven Gegenlager vermieden werden. Die Gleitlagerlegierung ist dabei vorzugsweise eine Kupfer-Zinn-Legierung, insbesondere eine CuSn12 oder CuSn7Zn4Pb4-Legierung, oder eine Aluminium-Zinn-Legierung, insbesondere eine AlSn20Cu-Legierung.

Es erweist sich weiter als vorteilhaft, wenn der rohrförmige Abschnitt aus Stahl oder Edelstahl oder aus seewasserbeständiger Bronze oder aus Aluminiumlegierung besteht.

Weiter erweist es sich als vorteilhaft, wenn das Halte- und Lagerteil und/oder das Bremsbelagträgerteil aus Stahl oder Edelstahl, oder aus seewasserbeständiger Bronze oder aus Aluminiumlegierung besteht.

Bevorzugtermaßen besteht das Halte- und Lagerteil aus Stahl oder Edelstahl und das Bremsbelagträgerteil aus seewasserbeständiger Bronze oder aus Aluminumlegierung. Gegenstand der Erfindung ist auch eine Windkraftanlage nach den Ansprüchen 28 und 29.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung.

In der Zeichnung zeigt:

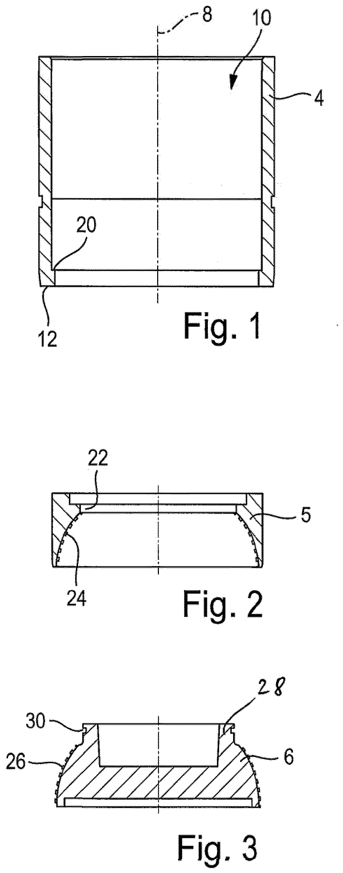

- Figur 1: eine Längsschnittansicht eines rohrförmigen Abschnitts eines Bremskolbens einer erfindungsgemäßen Bremseinrichtung;
- Figur 2: eine Längsschnittansicht eines Halte- und Lagerteils des Bremskolbens der erfindungsgemäßen Bremseinrichtung;
- Figur 3: eine Längsschnittansicht eines Bremsbelagträgerteils des Bremskolbens der erfindungsgemäßen Bremseinrichtung; und
- Figur 4: eine Längsschnittansicht des aus den Komponenten nach Figuren 1 - 3 gebildeten Bremskolbens mit angedeuteter Einbausituation in einem Zylinderraum einer erfindungsgemäßen Bremseinrichtung;
- Figuren 5 und 6: Ansichten einer erfindungsgemäßen Windkraftanlage.

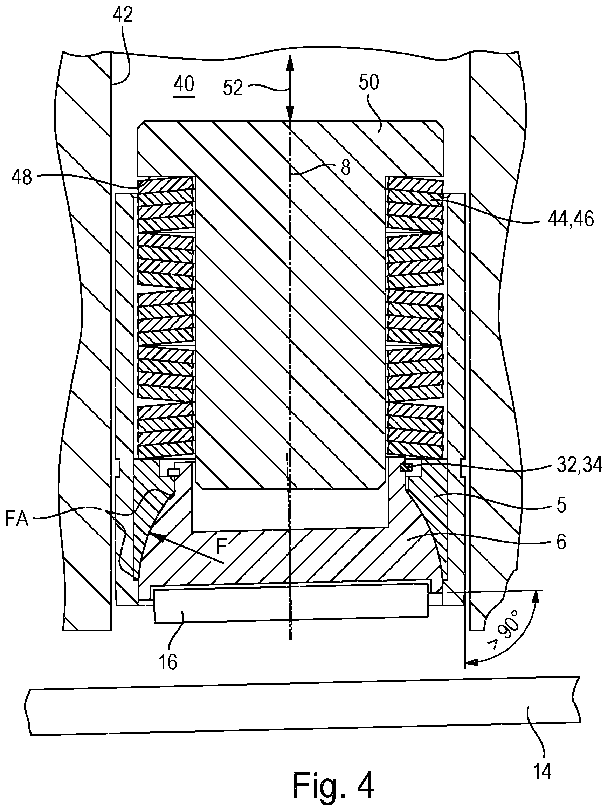

Die Figuren zeigen einen insgesamt mit dem Bezugszeichen 2 bezeichneten Bremskolben einer erfindungsgemäßen Bremseinrichtung 64, der nicht aus einem massiven Material gebildet ist, sondern aus einem rohrförmigen Abschnitt 4, einem Halte- und Lagerteil 5 und einem Bremsbelagträgerteil 6 gebaut ist. Der rohrförmige Abschnitt 4 ist im beispielhaft und bevorzugt dargestellten Fall konzentrisch zu einer Längsmittelachse 8 ausgebildet und begrenzt eine in Richtung der Längsmittelachse 8 erstreckte Durchgangsöffnung 10 und weist ein Stirnende 12 auf, welches einer in Figur 4 angedeuteten Bremsscheibe 14 zugewandt ist, die ihrerseits drehfest mit einer Welle einer Windkraftanlage gekoppelt ist. Im Bereich des Stirnendes 12 ist in die Durchgangsöffnung 10 das Halte-und Lagerteil 5 für das Bremsbelagträgerteil 6 ortsfest gegenüber dem rohrförmigen Abschnitt 4 eingefügt. Daran ist das Bremsbelagträgerteil 6 auf noch näher zu beschreibende Weise gehalten. Das Bremsbelagträgerteil 6 ist so ausgebildet und konfiguriert, dass dort ein mit der Bremsscheibe 14 zusammenwirkender Bremsbelag 16 anbringbar ist. Diese Anbringung ist vorzugsweise lösbar, so dass ein verschlissener Bremsbelag gegen einen neuen ausgewechselt werden kann, insbesondere durch eine Schraubverbindung.

In der Durchgangsöffnung 16 des rohrförmigen Abschnitts 4 ist eine vorzugsweise konzentrisch zu der Längsmittelachse 8 ausgebildete Stufe 20, vorzugsweise einstückig mit dem rohrförmigen Abschnitt 4 vorgesehen, gegen welche sich das Halte-und Lagerteil 5 im eingepressten Zustand axial abstützt.

Um eine Schiefstellung der Elemente einer Bremseinrichtung, also insbesondere der Welle und der damit drehfest gekoppelten Bremsscheibe relativ zu der Bremseinrichtung auszugleichen, die sich insbesondere dynamisch bei Belastungen der Windkraftanlage durch Windböen ergeben kann, ist der Bremskolben dynamisch ausgleichend ausgebildet, indem das Bremsbelagträgerteil 6 relativ zu dem Halte- und Lagerteil 5 verschwenkbar anpassbar gelagert ist. Das ringförmige Halte- und Lagerteil 5 begrenzt eine mittige Öffnung 22 konzentrisch zur Längsmittelachse 8. Hiervon ausgehend weist das Halte- und Lagerteil 5 innen eine kalottenförmige Lagerfläche 24 auf, gegen welche das Bremsbelagträgerteil 6 mit einer hierzu komplementären Gegenlagerfläche 26 anlegbar ist und gegenüber dem Halte-und Lagerteil 5 begrenzt verschwenkbar ist. Das Bremsbelagträgerteil 6 umfasst weiter einen Halsbereich 28, mit dem es sich durch die zentrische Öffnung 22 des Halte-und Lagerteils 5 in das Innere des rohrförmigen Abschnitts 4 hineinerstreckt. Der Halsbereich 28 umfasst im beispielhaft dargestellten Fall eine Umfangsnut 30, in die ein Sicherungselement 32, vorzugsweise in Form eines Sprengrings 34, einsetzbar ist. Dieses Sicherungselement 32 bildet einen radialen Überstand des Bremsbelagträgerteils 6 über die Öffnung 22 und bildet somit einen formschlüssigen Hintergriff bezüglich der Längsmittelachse 8. Auf diese Weise ist das Bremsbelagträgerteil 6 unverlierbar, jedoch spielbehaftet beweglich und verschwenkbar an dem Halte- und Lagerteil 5 gehalten.

Im Bremsbetrieb passt sich das Bremsbelagträgerteil 6 an eine dauerhafte oder dynamische Schrägstellung der Bremsscheibe zur idealen Parallelausrichtung an, indem das Bremsbelagträgerteil 6 durch eine gleitende Bewegung über die kalottenförmigen Lagerflächen 24 und 26 gegenüber dem Halte- und Lagerteil 5 verschwenken kann. Querkräfte (in Figur 4 mit dem Pfeil F angedeutet) werden dann auf die flächenmäßig ausladende Lagerfläche 24 (in Figur 4 mit geschweifter Klammer FA angedeutet) auf das Halte- und Lagerteil 5 und von dort auf den rohrförmigen Abschnitt 4 übertragen. Durch den großen Lagerflächenbereich kommt es nicht zu Reibschweißerscheinungen oder ähnlichen Ausfällen.

Ferner ist in Figur 4 ein Zylinderraum 40 angedeutet, innerhalb dessen der Bremskolben 2 entlang der Längsmittelachse 8 stellbar ist. Dabei werden Querkomponenten, die im Zuge des Bremsbetriebs auftreten, von einer Zylinderlauffläche 42 des Zylinderraums 40 aufgenommen.

Die für eine Stellbewegung des Bremskolbens erforderlichen Stellkräfte können auf an sich beliebige Weise auf den Bremskolben 2 übertragen werden. Bei einer bevorzugten Ausführungsform kommen mechanische Komponenten zur Anwendung, bei denen es sich um nicht dargestellte stellbare Gestängekomponenten handeln kann oder - wie dargestellt - um eine Federstellkomponente 44 in Form eines Druckfederpakets 46.

Die Federstellkomponente 44 stützt sich vorzugsweise direkt an dem Halte- oder Lagerteil 5 ab. Anderenends stützt sich die Federstellkomponente 44 bzw. das Druckfederpaket 46 gegen ein Widerlager 48 ab. Dieses Widerlager 48 ist von einem zur Längsmittelachse 8 beispielhaft konzentrischen Bauteil 50 gebildet, welches in das Druckfederpaket 46 eingreift und dieses von innen führt. Auf das Bauteil 50 wird in lediglich schematisch angedeuteter Weise in Richtung der Längsmittelachse 8 die Bremskraft eingeleitet oder weggenommen (Doppelpfeil 52).

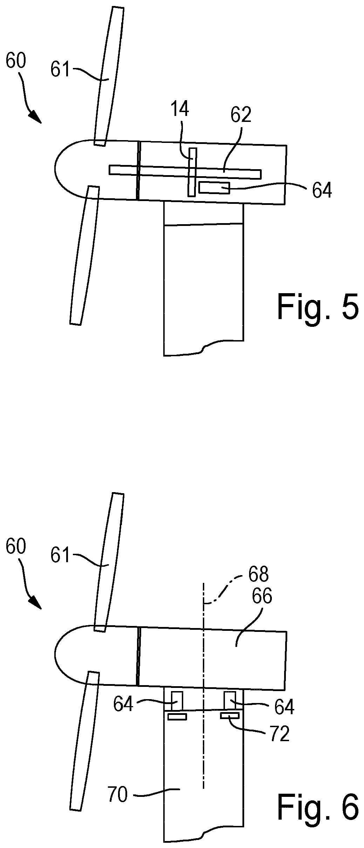

Figur 5 zeigt schematisch eine Windkraftanlage 60 mit einem Rotor 61 und mit einer Welle 62, auf der eine Bremsscheibe 14 drehfest angeordnet ist. Mit dieser Bremsscheibe 14 wirkt der vorstehend beschriebene Bremskolben 2 zusammen. Der Bremskolben 2 ist dabei Teil einer schematisch angedeuteten Bremseinrichtung 64 der Windkraftanlage 60.

Figur 6 zeigt schematisch eine Windkraftanlage 60, bei der eine den Rotor 61 haltende und lagernde Gondel 66 um eine ungefähr vertikale Achse 68 bezüglich eines die Gondel 66 tragenden Trägerturms 70 drehbar und damit bezüglich der Windrichtung optimal ausrichtbar ist. Wirktechnisch zwischen der Gondel 66 und dem Trägerturm 70 ist eine Bremseinrichtung 64 zum Festsetzen der Gondel 66 gegenüber dem Trägerturm 70 in einer wählbaren Drehstellung schematisch angedeutet. Die Bremseinrichtung 64 umfasst einen Bremskolben der vorstehend beschriebenen Art, der gegen ein Gegenlager 72, insbesondere in Form einer Ringsscheibe oder in Form von Ringscheibensegmenten, stellbar ist.

## Patentansprüche

1. Bremseinrichtung (64) für eine Windkraftanlage ( 60 mit einer einem Rotor ( 61 ) zugeordneten Welle (62) und einer der Welle (62) zugeordneten und mit dieser drehfest gekoppelten Bremsscheibe (14), oder
für eine Windkraftanlage (60) mit einer einen Rotor (61) haltenden und lagernden Gondel (66) und mit einem Trägerturm (70) für die Gondel, wobei die Gondel (66) gegenüber dem Trägerturm (70) um eine Achse (68) drehbar gelagert ist, wobei die Bremseinrichtung (64) zum Festsetzen der Gondel (66) gegenüber dem Trägerturm (70) in einer wählbaren Drehstellung ausgebildet ist,
wobei die Bremseinrichtung (64) einen Bremskolben (2) umfasst, wobei der Bremskolben (2) gegen die Bremsscheibe (14) zustellbar ist oder der Bremskolben (2) entweder an der Gondel (66) oder an dem Trägerturm (70) anordenbar ist und gegen ein Gegenlager (72) am jeweils anderen Teil zum Ausüben der Bremskraft stellbar ist, **dadurch gekennzeichnet, dass** der Bremskolben (2) einen rohrförmigen Abschnitt (4) mit einer Längsmittelachse (8) und mit einem der Bremsscheibe (14) oder dem Gegenlager (72) zugewandten Stirnende (12) und mit einer Durchgangsöffnung (10) aufweist,
und dass der rohrförmige Abschnitt (4) des Bremskolbens (2) zur längsverschieblichen Führung in einem den Bremskolben (2) aufnehmenden Zylinderraum (40) ausgebildet ist,
und dass in der Durchgangsöffnung (10) im Bereich des Stirnendes (12) des rohrförmigen Abschnitts (4) ein ringförmiges Halte- und Lagerteil (5) gegenüber dem rohrförmigen Abschnitt (4) ortsfest oder längsverschieblich eingefügt ist, und dass das Halte-und Lagerteil (5) radial innen eine kalottenförmige Lagerfläche (24) zur Lagerung eines Bremsbelagträgerteils (6) aufweist, und dass das Bremsbelagträgerteil (6) eine zu der Lagerfläche (24) komplementäre kalottenförmige Gegenlagerfläche (26) aufweist, so dass das Bremsbelagträgerteil (6) gegenüber dem Halte- und Lagerteil (5) schwenkbar gelagert und gehalten ist,
und dass das Halte- und Lagerteil (5) mit seiner kalottenförmigen Lagerfläche (24) in Richtung der Längsmittelachse (8) vollständig innerhalb des rohrförmigen Abschnitts (4) des Bremskolbens (2) angeordnet ist.

2. Bremseinrichtung (64) nach Anspruch 1, **dadurch gekennzeichnet, dass** das Halte- und Lagerteil (5) gegenüber dem rohrförmigen Abschnitt (4) eingepresst oder unter Ausnutzung thermischer Ausdehnung und anschließender Zusammenziehung beim Abkühlen ortsfest verankert ist.

3. Bremseinrichtung (64) nach Anspruch 1 oder 2, **dadurch gekennzeichnet, dass** sich das Bremsbelagträgerteil (6) mit einem Halsbereich (28) durch die von dem ringförmigen Halte- und Lagerteil (5) begrenzte Öffnung (22) hindurcherstreckt und darin in Richtung der Längsmittelachse (8) formschlüssig jedoch gleichwohl schwenkbar gehalten ist.

4. Bremseinrichtung (64) nach Anspruch 3, **dadurch gekennzeichnet**, **dadurch gekennzeichnet, dass** das Bremsbelagträgerteil (6) ausgehend von seinem Halsbereich (28) einen radialen Überstand über die von dem ringförmigen Halte- und Lagerteil (5) begrenzte Öffnung (22) bildet, so dass hierdurch die formschlüssige Halterung des Bremsbelagträgerteils (6) an dem Halte- und Lagerteil (5) gebildet ist.

5. Bremseinrichtung (64) nach Anspruch 4, **dadurch gekennzeichnet, dass** der radiale Überstand von einem Sicherungselement (32), insbesondere von einem Sicherungsring, insbesondere von einem Sprengring (34) gebildet ist, das bzw. der an dem Halsbereich (38) des Bremsbelagträgerteils (6) gelagert ist.

6. Bremseinrichtung (64) nach einem oder mehreren der vorstehenden Ansprüche, **dadurch gekennzeichnet dass** bei der Lagerfläche (24) des Halte- und Lagerteils (5) und/oder bei der Gegenlagerfläche (26) des Bremsbelagträgerteils (6) eine tribologisch wirksame Beschichtung vorgesehen ist.

7. Bremseinrichtung (64) nach einem oder mehreren der vorstehenden Ansprüche, **dadurch gekennzeichnet, dass** in der Durchgangsöffnung (10) eine konzentrisch zu der Längsmittelachse (8) ausgebildete Stufe (20) vorgesehen ist, gegen welche sich das Halte- und Lagerteil (5) axial abstützt, und dass die Stufe (20) mit ihrer Anlagefläche für das Halte- und Lagerteil (5) von der Bremsscheibe (14) abgewandt ist.

8. Bremseinrichtung (64) nach einem oder mehreren der vorstehenden Ansprüche, **dadurch gekennzeichnet, dass** eine Federstellkomponente, vorzugsweise in Form eines Druckfederpakets oder Tellerfederpakets (46), vorgesehen ist für die Ausübung von für eine Stellbewegung des Bremskolbens (2) erforderlichen Stellkräften und dass die Federstellkomponente unmittelbar auf den rohrförmigen Abschnitt (4) und/oder auf das Halte- und Lagerteil (5) und/oder auf das Bremsbelagträgerteil (6) einwirkt.

9. Bremseinrichtung (64) nach einem oder mehreren der vorstehenden Ansprüche, **dadurch gekennzeichnet, dass** das Bremsbelagträgerteil (6) in Richtung der Längsmittelachse (8) vollständig innerhalb des rohrförmigen Abschnitts (4) des Bremskolbens (2) angeordnet ist und gegenüber einem Stirnende (12) des rohrförmigen Abschnitts (4) in Richtung der Längsmittelachse (8) wenigstens 0,5 mm, insbesondere wenigstens 1,0 mm, insbesondere wenigstens 1,5 mm, insbesondere wenigstens 2,0 mm, insbesondere wenigstens 2,5 mm und insbesondere höchstens 3,5 mm zurückgesetzt ist, und dass der rohrförmige Abschnitt (4) zumindest an seinem Stirnende (12) aus einer Gleitlagerlegierung gebildet ist.

10. Bremseinrichtung (64) nach Anspruch 9, **dadurch gekennzeichnet, dass** die Gleitlagerlegierung eine Kupfer-Zinn-Legierung, insbesondere eine CuSn12 oder CuSn7Zn4Pb4-Legierung, oder eine Aluminium-Zinn-Legierung, insbesondere eine AlSn20Cu-Legierung, ist.

11. Bremseinrichtung (64) nach einem oder mehreren der vorstehenden Ansprüche, **dadurch gekennzeichnet, dass** der rohrförmige Abschnitt (4) aus Stahl oder aus seewasserbeständiger Bronze oder aus Aluminiumlegierung besteht.

12. Bremseinrichtung (64) nach einem oder mehreren der vorstehenden Ansprüche, **dadurch gekennzeichnet, dass** das Halte- und Lagerteil (5) und/oder das Bremsbelagträgerteil (6) aus Stahl oder aus seewasserbeständiger Bronze oder aus Aluminiumlegierung besteht.

13. Bremseinrichtung (44) nach einem oder mehreren der vorstehenden Ansprüche, **dadurch gekennzeichnet, dass** das Gegenlager (72) von einer in Drehrichtung erstreckten Ringscheibe oder von Ringscheibensegmenten gebildet ist.

14. Windkraftanlage (60) mit einer einem Rotor (61) zugeordneten Welle (62) und einer der Welle (62) zugeordneten und mit dieser drehfest gekoppelten Bremsscheibe (14), **gekennzeichnet durch** eine Bremseinrichtung (64) nach einem oder mehreren der vorstehenden Ansprüche 1-12, wobei der Bremskolben (2) gegen die Bremsscheibe (14) zustellbar ist.

15. Windkraftanlage (60) mit einer einen Rotor (61) haltenden und lagernden Gondel (66) und mit einem Trägerturm (70) für die Gondel, wobei die Gondel (66) gegenüber dem Trägerturm (70) um eine Achse (68) drehbar gelagert ist, mit einer Bremseinrichtung (64) zum Festsetzen der Gondel (66) gegenüber dem Trägerturm (70) in einer wählbaren Drehstellung, **dadurch gekennzeichnet, dass** die Bremseinrichtung (64) nach einem oder mehreren der vorstehenden Ansprüche - 1-13 ausgebildet ist, wobei der Bremskolben (2) entweder an der Gondel (66) oder an dem Trägerturm (70) anordenbar ist und gegen ein Gegenlager (72) am jeweils anderen Teil zum Ausüben der Bremskraft stellbar ist.

## Claims

1. Braking device (64) for a wind turbine (60) comprising a shaft (62), which is associated with a rotor (61), and a brake disk (14), which is associated with the shaft (62) and coupled thereto for conjoint rotation, or for a wind turbine (60) comprising a nacelle (66), which holds and supports a rotor (61), and comprising a support tower (70) for the nacelle, the nacelle (66) being mounted rotatably about an axis (68) relative to the support tower (70), the braking device (64) being designed to fix the nacelle (66) relative to the support tower (70) in a selectable rotational position,
the braking device (64) comprising a brake piston (2), the brake piston (2) being able to be advanced against the brake disk (14) or the brake piston (2) being able to be arranged either on the nacelle (66) or on the support tower (70) and being able to be adjusted against a counter bearing (72) on the other part in order to exert the braking force, **characterized in that** the brake piston (2) has a tubular portion (4) having a longitudinal central axis (8) and having one of the brake disk (14) or the end face (12) facing the counter bearing (72) and having a through-opening (10),
and **in that** the tubular portion (4) of the brake piston (2) is designed for longitudinally displaceable guidance in a cylinder chamber (40) accommodating the brake piston (2),
and **in that** in the through-opening (10) in the region of the end face (12) of the tubular portion (4), an annular holding and supporting part (5) is inserted in a fixed or longitudinally displaceable manner relative to the tubular portion (4), and **in that** the holding and supporting part (5) has a dome-shaped bearing surface (24) radially on the inside for supporting a brake pad carrier part (6), and **in that** the brake pad carrier part (6) has a dome-shaped counter-bearing surface (26) which is complementary to the bearing surface (24), so that the brake pad carrier part (6) is pivotably mounted and held relative to the holding and supporting part (5),
and **in that** the holding and supporting part (5) having its dome-shaped bearing surface (24) is arranged completely within the tubular portion (4) of the brake piston (2) in the direction of the longitudinal central axis (8).

2. Braking device (64) according to claim 1, **characterized in that** the holding and supporting part (5) is pressed in relative to the tubular portion (4) or is anchored in place by using thermal expansion and subsequent contraction during cooling.

3. Braking device (64) according to claim 1 or 2, **characterized in that** the brake pad carrier part (6) extends with a neck region (28) through the opening (22) delimited by the annular holding and supporting part (5) and is held therein in a form-fitting but nevertheless pivotable manner in the direction of the longitudinal central axis (8).

4. Braking device (64) according to claim 3, **characterized in characterized in that** the brake pad carrier part (6), starting from its neck region (28), forms a radial projection over the opening (22) delimited by the annular holding and supporting part (5), so that the form-fitting mounting of the brake pad carrier part (6) on the holding and supporting part (5) is formed thereby.

5. Braking device (64) according to claim 4, **characterized in that** the radial projection is formed by a securing element (32), in particular by a securing ring, in particular by a snap ring (34), which is mounted on the neck region (38) of the brake pad carrier part (6).

6. Braking device (64) according to one or more of the preceding claims, **characterized in that** a tribologically effective coating is provided on the bearing surface (24) of the holding and supporting part (5) and/or on the counter-bearing surface (26) of the brake pad carrier part (6).

7. Braking device (64) according to one or more of the preceding claims, **characterized in that** in the through-opening (10), a step (20) is provided which is concentric with the longitudinal central axis (8) and against which the holding and supporting part (5) is axially supported, and **in that** the step (20) having its contact surface for the holding and supporting part (5) faces away from the brake disk (14).

8. Braking device (64) according to one or more of the preceding claims, **characterized in that** a spring adjustment component, preferably in the form of a compression spring assembly or disk spring assembly (46), is provided for exerting the adjustment forces required for an adjustment movement of the brake piston (2) and **in that** the spring adjustment component acts directly on the tubular portion (4) and/or on the holding and supporting part (5) and/or on the brake pad carrier part (6).

9. Braking device (64) according to one or more of the preceding claims, **characterized in that** the brake pad carrier part (6) is arranged completely within the tubular portion (4) of the brake piston (2) in the direction of the longitudinal central axis (8) and is set back from an end face (12) of the tubular portion (4) in the direction of the longitudinal central axis (8) by at least 0.5 mm, in particular at least 1.0 mm, in particular at least 1.5 mm, in particular at least 2.0 mm, in particular at least 2.5 mm and in particular at most 3.5 mm, and **in that** the tubular portion (4) is formed from a plain bearing alloy at least at its end face (12).

10. Braking device (64) according to claim 9, **characterized in that** the plain bearing alloy is a copper-tin alloy, in particular a CuSn12 or CuSn7Zn4Pb4 alloy, or an aluminum-tin alloy, in particular an AlSn20Cu alloy.

11. Braking device (64) according to one or more of the preceding claims, **characterized in that** the tubular portion (4) is made of steel or seawater-resistant bronze or aluminum alloy.

12. Braking device (64) according to one or more of the preceding claims, **characterized in that** the holding and supporting part (5) and/or the brake pad carrier part (6) is made of steel or seawater-resistant bronze or aluminum alloy.

13. Braking device (44) according to one or more of the preceding claims, **characterized in that** the counter bearing (72) is formed by an annular disk extending in the direction of rotation or by annular disk segments.

14. Wind turbine (60) comprising a shaft (62), which is associated with a rotor (61), and a brake disk (14), which is associated with the shaft (62) and coupled thereto for conjoint rotation, **characterized by** a braking device (64) according to one or more of the preceding claims 1-12, the brake piston (2) being able to be advanced against the brake disk (14).

15. Wind turbine (60) comprising a nacelle (66), which holds and supports a rotor (61), and comprising a support tower (70) for the nacelle, the nacelle (66) being mounted rotatably about an axis (68) relative to the support tower (70), comprising a braking device (64) for fixing the nacelle (66) relative to the support tower (70) in a selectable rotational position, **characterized in that** the braking device (64) is designed according to one or more of the preceding claims - 1-13, the brake piston (2) being able to be arranged either on the nacelle (66) or on the support tower (70) and being able to be adjusted against a counter bearing (72) on the other part in order to exert the braking force.

## Revendications

1. Dispositif de freinage (64) pour une éolienne (60) comportant un arbre (62) associé à un rotor (61) et un disque de freinage (14) associé à l'arbre (62) et accouplé de manière solidaire en rotation à celui-ci, ou pour une éolienne (60) comportant une nacelle (66) maintenant et montant un rotor (61) et comportant une tour de support (70) pour la nacelle, dans lequel la nacelle (66) est montée de manière à pouvoir tourner autour d'un axe (68) par rapport à la tour de support (70), dans lequel le dispositif de freinage (64) est conçu pour l'immobilisation de la nacelle (66) par rapport à la tour de support (70) dans une position de rotation pouvant être sélectionnée,
dans lequel le dispositif de freinage (64) comprend un piston de freinage (2), dans lequel le piston de freinage (2) peut être placé contre le disque de freinage (14) ou le piston de freinage (2) peut être disposé soit sur la nacelle (66) soit sur la tour de support (70) et peut être placé contre un contre-montage (72) sur l'autre pièce respective pour permettre d'exercer la force de freinage, **caractérisé en ce que** le piston de freinage (2) présente une section tubulaire (4) comportant un axe central longitudinal (8) et comportant une extrémité frontale (12) tournée vers le disque de freinage (14) ou le contre-montage (72) et comportant une ouverture de passage (10),
et **en ce que** la section tubulaire (4) du piston de freinage (2) est conçue pour le guidage de manière coulissante longitudinalement dans un espace cylindrique (40) recevant le piston de freinage (2),
et **en ce que**, dans l'ouverture de passage (10), dans la zone de l'extrémité frontale (12) de la section tubulaire (4), une pièce de maintien et de montage (5) annulaire est insérée de manière fixe ou de manière à pouvoir coulisser longitudinalement par rapport à la section tubulaire (4), et **en ce que** la pièce de maintien et de montage (5) présente radialement à l'intérieur une surface de montage (24) en forme de voute pour le montage d'une pièce de support de garniture de freinage (6), et **en ce que** la pièce de support de garniture de freinage (6) présente une surface de contre-montage (26) en forme de voute complémentaire à la surface de montage (24), de sorte que la pièce de support de garniture de freinage (6) est montée et maintenue de manière à pouvoir pivoter par rapport à la pièce de maintien et de montage (5),
et **en ce que** la pièce de maintien et de montage (5) est disposée avec sa surface de montage (24) en forme de voute, dans la direction de l'axe central longitudinal (8), entièrement à l'intérieur de la section tubulaire (4) du piston de freinage (2).

2. Dispositif de freinage (64) selon la revendication 1, **caractérisé en ce que** la pièce de maintien et de montage (5) est enfoncée par rapport à la section tubulaire (4) ou est ancrée de manière fixe en utilisant une dilatation thermique et une contraction ultérieure lors du refroidissement.

3. Dispositif de freinage (64) selon la revendication 1 ou 2, **caractérisé en ce que** la pièce de support de garniture de freinage (6) s'étend avec une zone formant col (28) à travers l'ouverture (22) délimitée par la pièce de maintien et de montage (5) annulaire et est maintenue dans celle-ci dans la direction de l'axe central longitudinal (8) par complémentarité de forme mais néanmoins de manière à pouvoir pivoter.

4. Dispositif de freinage (64) selon la revendication 3, caractérisé en ce **caractérisé en ce que** la pièce de support de garniture de freinage (6) forme, à partir de sa zone formant col (28), une saillie radiale sur l'ouverture (22) délimitée par la pièce de maintien et de montage (5) annulaire, de sorte que le maintien par complémentarité de forme de la pièce de support de garniture de freinage (6) sur la pièce de maintien et de montage (5) est ainsi formée.

5. Dispositif de freinage (64) selon la revendication 4, **caractérisé en ce que** la saillie radiale est formée par un élément de blocage (32), en particulier par un anneau de sécurité, en particulier par un anneau d'arrêt (34), qui est monté sur la zone formant col (38) de la pièce de support de garniture de freinage (6).

6. Dispositif de freinage (64) selon l'une ou plusieurs des revendications précédentes, **caractérisé en ce qu'**un revêtement à effet tribologique est prévu sur la surface de montage (24) de la pièce de maintien et de montage (5) et/ou sur la surface de contre-montage (26) de la pièce de support de garniture de freinage (6).

7. Dispositif de freinage (64) selon l'une ou plusieurs des revendications précédentes, **caractérisé en ce qu'**un gradin (20) concentrique à l'axe central longitudinal (8) est prévu dans l'ouverture de passage (10), gradin contre lequel la pièce de maintien et de montage (5) s'appuie axialement, et **en ce que** le gradin (20) est opposé au disque de freinage (14) par sa surface de montage pour la pièce de maintien et de montage (5).

8. Dispositif de freinage (64) selon l'une ou plusieurs des revendications précédentes, **caractérisé en ce qu'**un composant de réglage à ressort, de préférence sous la forme d'un paquet de ressorts de compression ou d'un paquet de ressorts Belleville (46), est prévu pour permettre d'exercer des forces de réglage nécessaires pour un mouvement de réglage du piston de freinage (2) et **en ce que** le composant de réglage à ressort agit directement sur la section tubulaire (4) et/ou sur la pièce de maintien et de montage (5) et/ou sur la pièce de support de garniture de freinage (6).

9. Dispositif de freinage (64) selon l'une ou plusieurs des revendications précédentes, **caractérisé en ce que** la pièce de support de garniture de freinage (6) est disposée, dans la direction de l'axe central longitudinal (8), entièrement à l'intérieur de la section tubulaire (4) du piston de freinage (2) et est en retrait d'au moins 0,5 mm, en particulier d'au moins 1,0 mm, en particulier d'au moins 1,5 mm, en particulier d'au moins 2,0 mm, en particulier d'au moins 2,5 mm et en particulier d'au maximum 3,5 mm, par rapport à une extrémité frontale (12) de la section tubulaire (4) dans la direction de l'axe central longitudinal (8), et **en ce que** la section tubulaire (4) est formée, au moins au niveau de son extrémité frontale (12), d'un alliage pour palier lisse.

10. Dispositif de freinage (64) selon la revendication 9, **caractérisé en ce que** l'alliage pour palier lisse est un alliage cuivre-étain, en particulier un alliage CuSnl2 ou CuSn7Zn4Pb4, ou un alliage aluminium-étain, en particulier un alliage AlSn20Cu.

11. Dispositif de freinage (64) selon l'une ou plusieurs des revendications précédentes, **caractérisé en ce que** la section tubulaire (4) se compose d'acier ou de bronze résistant à l'eau de mer ou en alliage d'aluminium.

12. Dispositif de freinage (64) selon l'une ou plusieurs des revendications précédentes, **caractérisé en ce que** la pièce de maintien et de montage (5) et/ou la pièce de support de garniture de freinage (6) se composent d'acier ou de bronze résistant à l'eau de mer ou en alliage d'aluminium.

13. Dispositif de freinage (44) selon l'une ou plusieurs des revendications précédentes, **caractérisé en ce que** le contre-montage (72) est formé par un disque annulaire s'étendant dans la direction de rotation ou par des segments de disque annulaire.

14. Éolienne (60) comportant un arbre (62) associé à un rotor (61) et un disque de freinage (14) associé à l'arbre (62) et accouplé de manière solidaire en rotation à celui-ci, **caractérisée par** un dispositif de freinage (64) selon l'une ou plusieurs des revendications précédentes 1 à 12, dans laquelle le piston de freinage (2) peut être placé contre le disque de freinage (14).

15. Éolienne (60) comportant une nacelle (66) maintenant et montant un rotor (61) et comportant une tour de support (70) pour la nacelle, dans laquelle la nacelle (66) est montée de manière rotative autour d'un axe (68) par rapport à la tour de support (70), comportant un dispositif de freinage (64) pour l'immobilisation de la nacelle (66) par rapport à la tour de support (70) dans une position de rotation pouvant être sélectionnée, **caractérisée en ce que** le dispositif de freinage (64) est réalisé selon l'une ou plusieurs des revendications précédentes 1 à 13, dans laquelle le piston de freinage (2) peut être disposé soit sur la nacelle (66) soit sur la tour de support (70) et peut être placé contre un contre-montage (72) sur l'autre pièce respective pour permettre d'exercer la force de freinage.
